# EUROPEAN PATENT APPLICATION

(11) **EP 2 687 896 A1**
(43) Date of publication of application: **22.01.2014**
(21) Application number: 12177055.6
(22) Date of filing: 19.07.2012
(51) Int. Cl.: G02C 7/04

(54) **Method for fitting a scleral lens prosthesis**

(71) Applicant: Van Blitterswijk, Jacob Hendrik, 7223 KE Baak (NL); Den Ouden, Adrianus, 3762 TC Soest (NL)
(72) Inventor: Van Blitterswijk, Jacob Hendrik, 7223 KE Baak (NL); Den Ouden, Adrianus, 3762 TC Soest (NL)
(74) Representative: De Vries & Metman

(57) **Abstract**

A method for fitting a scleral lens prosthesis to the eye of a patient is provided, comprising the steps of determining an imaginary circle with a diameter D on the sclera (1) of the eye substantially concentrically with the cornea (2) and at a position starting from which the scleral lens prosthesis in an outward direction is intended to contact the sclera; defining a first imaginary plane (5) extending through said imaginary circle; determining the part of the cornea having the largest distance from said first imaginary plane (6); determining a second imaginary plane (7) in parallel to the first imaginary plane and at a predetermined distance s above said part of the cornea having the largest distance from said plane; determining the distance d between the first imaginary plane and the second imaginary plane; and providing a scleral lens prosthesis with a circular base edge with diameter D' and an intermediate most elevated part with height d' above the base edge, and having such a geometry that the distance between the intermediate most elevated part thereof and the first imaginary plane is kept equal to d. Preferably d' is calculated from D, D' and d on the assumption that the imaginary circle is positioned on a part of the sclera which defines a ball shaped body with a predetermined radius.

## Description

The invention relates to a method for fitting a scleral lens prosthesis to the eye of a patient.

Scleral lenses firstly were developed at the end of the nineteenth century. The use and further development of scleral lenses diminished dramatically with the development of the corneal contact lenses in the forties of the twentieth century. However, although the unique optical benefits of corneal contact lenses would be very beneficial for patients with corneal distortions, such patient are least likely to tolerate such corneal contact lenses. In recent years, the introduction of new materials, such as rigid gas permeable polymers, revived the interest in the use of scleral lenses. Because scleral lenses rest entirely on the sclera, which are more durable and less sensitive than the very sensitive and fragile cornea, and do not contact the cornea, they avoid the limitations of the corneal contact lenses. Moreover, their centering on the eye is independent of the corneal topography regardless of the severity of the corneal distortion, making them extremely fit for use with patients suffering from a wide range of corneal distortions. However, a disadvantage of such scleral lenses (or scleral lens prosthesis) is the fact that the process of fitting such a lens (prosthesis) is a difficult and time-consuming process, generally with many repetitions of steps and involving a substantial amount of trial and error, making the process and its results hardly reproducible.

In view of the above it is an object of the present invention to provide an improved method for fitting a scleral lens prosthesis.

Thus, in accordance with the present invention, such a method comprises the steps of:
a. determining an imaginary circle with a diameter D on the sclera of the eye substantially concentrically with the cornea and at a position starting from which the scleral lens prosthesis in an outward direction is intended to contact the sclera;
b. defining a first imaginary plane extending through said imaginary circle;
c. determining the part of the cornea having the largest distance from said first imaginary plane;
d. determining a second imaginary plane in parallel to the first imaginary plane and at a predetermined distance s above said part of the cornea having the largest distance from said plane;
e. determining the distance d between the first imaginary plane and the second imaginary plane;
f. providing a scleral lens prosthesis with a circular base edge with diameter D' and an intermediate most elevated part with height d' above the base edge, and having such a geometry that the distance between the intermediate most elevated part thereof and the first imaginary plane is kept equal to d.

It has appeared that keeping the distance between the intermediate most elevated part of the scleral lens prosthesis and the first imaginary plane equal to d allows to arrive at a more optimised geometry of the scleral lens prosthesis with less steps and thus more quickly. Said relationship limits the amount of applicable geometries without negatively influencing the properties of the final scleral lens prosthesis.

It is noted that the steps of the method do not necessarily need to be carried out exactly in the order as mentioned above. For example step c also may precede step b.

In a preferred embodiment of the method according to the present invention, d' is calculated from D, D' and d on the assumption that the imaginary circle is positioned on a part of the sclera which defines a ball shaped body with a pre-determined radius, preferably a radius of 13,5 mm. This further improves the efficiency of the fitting method because based upon the known diameter D of the imaginary circle, the known diameter D' of the circular base edge of the scleral lens prosthesis and the known distance d a well-defined mathematical equation (based upon the assumed ball shape of the sclera with said radius) will yield d'.

In one embodiment of the method, the diameter of said circle is chosen between 12 and 14 mm, and preferably the diameter of said circle is chosen to be 13 mm. It has been determined that a diameter of 13 mm is most appropriate by the majority of patients.

In yet another embodiment of the method according to the present invention, the distance s is chosen to be 2 mm or less, and preferably the distance s is chosen to be 1 mm or less. Generally, said distance will be chosen as small as possible, however such that under normal circumstances any contact between the cornea and the scleral lens prosthesis is avoided.

According to another embodiment of the method, the steps a - e are carried out with a set of fitting lenses, each with a circular base edge which is intended for contacting the sclera and which has said diameter D, and each with a central elevated part at different distances d from the first imaginary plane extending through said base edge. Because from each fitting lens its diameter D and its specific distance d are known, d is known once it has been determined which fitting lens is the correct one (that means, for which fitting lens, once its base edge has been placed on the sclera, the central elevated part is positioned at the desired distance s from the highest point of the cornea).

It is conceivable, then, that the central elevated part is defined by a plane surface in parallel to said first imaginary plane extending through said base edge. As a result such fitting lenses also can be used with patients having very irregular corneal distortions (which, for example, are not centred on the eye).

In another embodiment of the method according to the present invention, the step of providing a scleral lens prosthesis with a circular base edge with diameter D' and an intermediate most elevated part with height d' above the base edge is repeated until properties of the scleral lens prosthesis meet predetermined requirements. For example, such properties may be at least one of optical performance and wearing comfort. The optical performance may be determined quickly, for example, by an appropriate reading test, whereas the determination of the wearing comfort generally will take some more time (for example it is possible that the patient should wear the scleral lens prosthesis for an uninterrupted period of at least three hours).

For said step of providing a scleral lens prosthesis with a circular base edge with diameter D' and an intermediate most elevated part with height d' above the base edge there are several possibilities. For example, during said step an average distance between the scleral lens prosthesis and the cornea may be kept substantially constant. As another example, during said step a radius of the scleral lens prosthesis in the area of the cornea is varied.

Hereinafter the invention will be elucidated while referring to the drawing which illustrates an exemplary embodiment of the method according to the present invention, and in which:

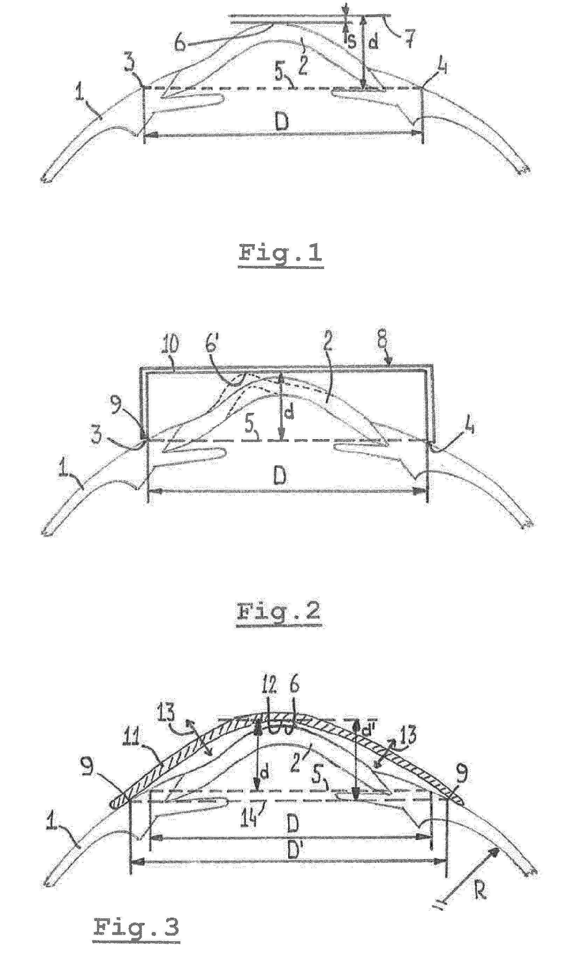

Figures 1-3 each show corresponding schematic cross sections of a forward part of an eye during successive steps of an embodiment of the method according to the present invention.

Figure 1 schematically shows a cross section of a forward part of an eye, illustrating the sclera 1 and the cornea 2. For carrying out a method for fitting a scleral lens prosthesis to said eye (for example the eye of a patient with corneal distortion), firstly an imaginary circle is determined on the eye with a diameter D and substantially concentrically with the cornea 2. In figure 1 this circle has been indicated by two points 3 and 4 (which correspond with the points where the circle - which extends perpendicularly to the plane of the drawing- intersects the plane of the drawing). The diameter D of the circle is chosen in such a manner (generally between 12 and 14 mm, preferably 13 mm) that the circle is located at the position starting from which the scleral lens prosthesis, once fitted to the eye, in an outward direction will contact the sclera 1 (or, in other words, the circle defines the innermost point of contact between the scleral lens prosthesis and the eye).

The next step of the method comprises defining a first imaginary plane 5 extending through said circle (in figure 1 indicated by a dotted line extending through circle points 3 and 4).

A further step of the invention comprises determining the part of the cornea 2 with the largest distance from said plane (in figure 1 indicated by reference sign 6).

Once said part 6 of the cornea 2 has been determined (using any appropriate method), a second imaginary plane 7 at a predetermined distance s (generally 2 mm or less, preferably at most 1 mm) above said part 6 of the cornea is determined.

Next, the distance d between the first imaginary plane 5 and said second imaginary plane 7 is determined.

Referring to figure 2, the same schematic cross section through the eye is shown, further showing one of a series of fitting lenses 8 which will be used for carrying out the above mentioned steps.

Each fitting lens 8 is provided with a circular base edge 9 which is intended for contacting the sclera 1 at the position of the imaginary circle and which has said diameter D. Further, each fitting lens 8 is provided with a central elevated part 10. For each fitting lens 8 of the series of fitting lenses, the diameter D is the same, but the distance d from the first imaginary plane 5 (which will extend through said base edge 9 once a fitting lens 8 is applied to the eye) is different for each fitting lens. Once the fitting lens 8 has been determined for which the central elevated part 10 is at the desired distance s above the part 6 of the cornea 2 with the largest distance from the first imaginary plane 5, distance d is known too from the specifics of said fitting lens.

As illustrated in the embodiment according to figure 2, the central elevated part 10 (which basically defines the second imaginary plane 7) is defined by a plane surface in parallel to said first imaginary plane 5. Whereas such a plane surface defines the entire central elevated part 10 in figure 2, as an alternative it also may define only a part thereof (in which case the remainder of the elevated part 10 may be curved or otherwise contoured, which also may be true for the parts of the fitting lens 8 between the base edge 9 and the central elevated part 10). Such a plane surface allows to use a fitting lens 8 with patients having a wide range of corneal distortions, as indicated schematically by an alternative geometry of the cornea (dotted lines) with an alternative position of the part 6'.

Next (figure 3) a scleral lens prosthesis 11 with a circular base edge 9 (defining the innermost line, generally circle, of contact between the scleral lens prosthesis and sclera 1 and in figure 3 positioned in a plane 14) with diameter D' (which in the illustrated embodiment is larger than D) and an intermediate elevated part 12 with height d' above the base edge 9 is fitted to the eye. The geometry of the scleral lens prosthesis 11 is such that the distance between the intermediate most elevated part 12 thereof and the first imaginary plane 5 is kept equal to d. Distance d' is calculated from D, D' and d on the assumption that the imaginary circle (defined by the intersection between the first imaginary plane 5 and the sclera 1) is positioned on a part of the sclera 1 which defines a substantially ball shaped body with a pre-determined radius R, preferably a radius of 13,5 mm.

The base edge 9 defines the transition between an outer region ("haptic zone") of the scleral lens prosthesis 11 contacting the sclera 1 and a transition zone towards a central part ("optic zone"). The transition zone and optic zone generally will not contact the eye and define a liquid reservoir between the eye and the scleral lens prosthesis 11.

The properties of the scleral lens prosthesis 11 (such as for example optical performance and wearing comfort) are determined and if these do not meet predetermined requirements (which generally will be the case), the geometry of said scleral lens prosthesis is varied (generally by replacing said prosthesis by another prosthesis) while keeping constant said distance d. The process of varying the geometry has been indicated schematically by arrows 13 in figure 3. These geometrical variations do not need to by symmetrical around the centre of the scleral lens prosthesis 11.

The step of varying the geometry is repeated until the relevant properties of the scleral lens prosthesis 11 meet the predetermined requirements.

The invention is not limited to the embodiments described above which may be varied widely within the scope of the invention as defined by the appending claims.

## Claims

1. Method for fitting a scleral lens prosthesis to the eye of a patient, comprising the steps of:
a. determining an imaginary circle with a diameter D on the sclera of the eye substantially concentrically with the cornea and at a position starting from which the scleral lens prosthesis in an outward direction is intended to contact the sclera;
b. defining a first imaginary plane extending through said imaginary circle;
c. determining the part of the cornea having the largest distance from said first imaginary plane;
d. determining a second imaginary plane in parallel to the first imaginary plane and at a predetermined distance s above said part of the cornea having the largest distance from said plane;
e. determining the distance d between the first imaginary plane and the second imaginary plane;
f. providing a scleral lens prosthesis with a circular base edge with diameter D' and an intermediate most elevated part with height d' above the base edge, and having such a geometry that the distance between the intermediate most elevated part thereof and the first imaginary plane is kept equal to d.

2. Method according to claim 1, wherein d' is calculated from D, D' and d on the assumption that the imaginary circle is positioned on a part of the sclera which defines a ball shaped body with a pre-determined radius.

3. Method according to claim 2, wherein said pre-determined radius is 13,5 mm.

4. Method according to claim 1,2 or 3, wherein the diameter of said imaginary circle is chosen between 12 and 14 mm.

5. Method according to claim 4, wherein the diameter of said circle is chosen to be 13 mm.

6. Method according to any of the previous claims, wherein the distance s is chosen to be 2 mm or less.

7. Method according to claim 6, wherein the distance s is chosen to be 1 mm or less.

8. Method according to any of the previous claims, wherein the steps a - e are carried out with a set of fitting lenses, each with a circular base edge which is intended for contacting the sclera at said imaginary circle and which has said diameter D, and each with a central elevated part at different distances d from the first imaginary plane extending through said base edge.

9. Method according to claim 8, wherein the central elevated part is defined by a plane surface in parallel to said first imaginary plane extending through said base edge.

10. Method according to any of the previous claims, wherein step f is repeated until properties of the scleral lens prosthesis meet predetermined requirements.

11. Method according to claim 10, wherein the properties are at least one of optical performance and wearing comfort.

12. Method according to any of the previous claims, wherein during step f an average distance between the scleral lens prosthesis and the cornea is kept substantially constant.

13. Method according to any of the previous claims, wherein during step f a radius of the scleral lens prosthesis in the area of the cornea is varied.
